# EUROPEAN PATENT APPLICATION

(11) **EP 2 662 756 A1**
(43) Date of publication of application: **13.11.2013**
(21) Application number: 12167711.6
(22) Date of filing: 11.05.2012
(51) Int. Cl.: G06F 3/041, G06F 3/048, G06F 3/033

(54) **Touch screen palm input rejection**

(71) Applicant: BlackBerry Limited, Waterloo, ON N2L 3W8 (CA)
(72) Inventor: Griffin, Jason Tyler, Waterloo, Ontario N2L 3W8 (CA)
(74) Representative: Greenaway, Martin William

(57) **Abstract**

Palm input rejection on a touch screen 108 of an electronic device 110 is provided by selecting a rejection region 204 of the touch screen dependent upon the orientation of a pointing device 102. A predicted palm position 202 relative to the touch screen 108 is predicted and touch-input functionality of a rejection region 204 of the touch screen 108 is disabled, with the rejection region 204 selected dependent upon the predicted palm position 202 and the predicted palm position 202 based on an orientation of a pointing device 102. The orientation of the pointing device 102 may be determined, for example, from the handedness of a user or from an orientation detector of a stylus pointing device 102.

## Description

### BACKGROU N D

Touch screens are touch-sensitive display screens that provide a user interface for entering position information to an electronic device. The operation of the electronic device is determined by the touch position or by a combination of the touch position and an image displayed at the touch position.

A common use of a touch screen is to provide position input to a computer drawing or handwriting application. In this application, a pointing device, such as user's finger or a stylus, is used, for example, to draw lines, move or size objects and to interact with a user interface. However, when drawing or writing it is common for a user to rest the palm of their hand on the drawing surface. If the palm of a hand is rested on a touch screen, such as a resistive or capacitive screen, it causes an unwanted position input to the electronic devices that can result in an unwanted image being produced on the touch screen at the palm position, or it can cause an unwanted selection to be made. Further, the presence of the palm input may cause the desired input from a finger or stylus to be ignored.

One approach that seeks to mitigate this problem for a software application to attempt to determine whether a particular touch is due to a pointing device or a palm. This may be done, for example, by examining the spatial extent of the touch. In practice, the properties of the palm touch vary from user to user and may be difficult to distinguish from the touch of a pointing device. Therefore, there is a desire for a more reliable technique for acquiring position input from a touch screen that is not degraded by contact of a palm with the touch screen.

### BRIEF DESCRIPTION OF THE DRAWINGS

Illustrative embodiments of the present disclosure will be described below with reference to the included drawings such that like reference numerals refer to like elements and in which:

**FIG. 1** is a diagram of a disclosed drawing system, in accordance with various illustrative embodiments of the present disclosure.

**FIG's 2-4** are diagrams of further disclosed drawing systems, in accordance with some embodiments of the disclosure.

**FIG. 5** is a block diagram of an illustrative computer drawing system, in accordance with various embodiments of the present disclosure.

**FIG. 6** is a flow chart of an illustrative method for rejecting palm touch input from a touch screen of an electronic device, in accordance with various illustrative embodiments of the present disclosure.

### DETAILED DESCRIPTION

For simplicity and clarity of illustration, reference numerals may be repeated among the figures to indicate corresponding or analogous elements. Numerous details are set forth to provide an understanding of the illustrative embodiments described herein. The illustrative embodiments may be practiced without these details. In other instances, well-known methods, procedures, and components have not been described in detail to avoid obscuring the illustrative embodiments described. The description is not to be considered as limited to the scope of the illustrative embodiments shown and described herein.

The present disclosure relates to a method and apparatus for providing desired position input from a touch screen while rejecting undesired input due to a user's palm resting on the touch screen.

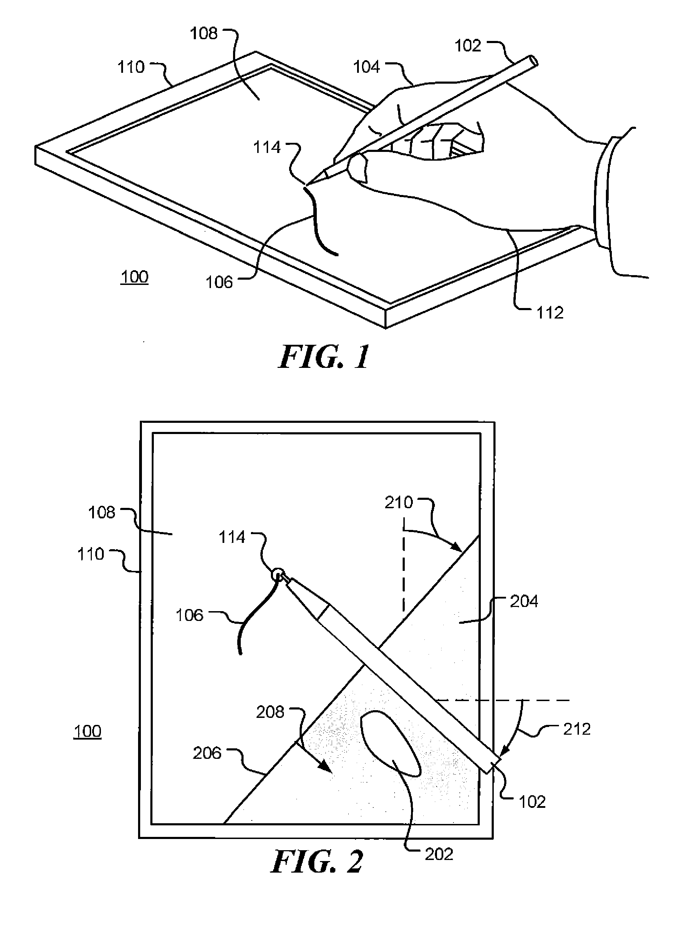

**FIG. 1** is a diagram of an illustrative computer drawing system 100, in accordance with some embodiments of the disclosure. In **FIG. 1****,** a stylus 102 or other pointing device is manipulated by a user 104 to draw a line or other image 106 on a touch screen 108 of an electronic device 110. The touch screen 108 may be a capacitive or resistive touch screen, for example. The electronic device 110 may be, for example, a laptop computer, tablet computer (tablet), mobile phone, personal digital assistant (PDA), or other portable or non-portable electronic device.

In operation, the touch screen 108 of the electronic device 110 senses one or more touch positions at which a pointing device, such as a stylus 102 or a finger of a user 104, touches, or almost touches, the touch screen 108. However, when used for drawing or writing, the palm 112 of the user may be rested on the touch screen 108. The touch of the palm 112 may not be intended as input to the electronic device, so it is often desirable to differentiate between palm touch and a desired touch position, such as position 114 at the tip of the stylus 102.

**FIG. 2** is a further diagram of an illustrative drawing system 100, in accordance with some embodiments of the disclosure. **FIG. 2** shows a first touch position or region 114, corresponding to touch by a pointing device such as the tip of the stylus 102, and a second touch region or position 202, corresponding to touch by the palm of a user. In accordance with some embodiments of the disclosure, a rejection region 204 of the touch screen 108 is selected dependent upon a predicted position of palm touch region 202. A touch position outside of the selected rejection region 204, such as desired touch position 114, is accepted and provided as input to the electronic device. Touch positions within the rejection region 204, such as palm position 202, are rejected and are not input to the electronic device. Thus, the touch-input functionality of the touch screen is disabled in the rejection region. In this example, the rejection region 204 comprises the lower right corner of the touch screen 108. In operation, a touch processor of the electronic device 110 identifies the desired touch position 114 dependent upon its location with respect to the selected rejection region 204 of the touch screen and outputs the identified touch position. In the example shown in FIG. 2, the selected rejection region 204 has boundary 206. The position of the boundary 206 may be adjusted. For example, the boundary position may be moved in the direction indicated by the arrow 208 if the position 114 approaches the boundary. The rejection region may have a straight or curved boundary. The angle 210 of the boundary 206 may also be varied. In one illustrative embodiment, the angle 210 is selected dependent upon the orientation angle 212 of a stylus 212 with respect to the touch screen 108. The orientation angle 212 may be sensed, for example, through interaction of the stylus 102 and the electronic device 110 or by an orientation detector of the stylus, In this way, the boundary 206 may be automatically adjusted dependent upon the orientation of the stylus.

The orientation of the stylus, or other pointing device, relative to the touch screen is, at least in part, dependent upon the handedness of the user. Therefore, if the handedness of the user is known, the orientation of the stylus may be estimated.

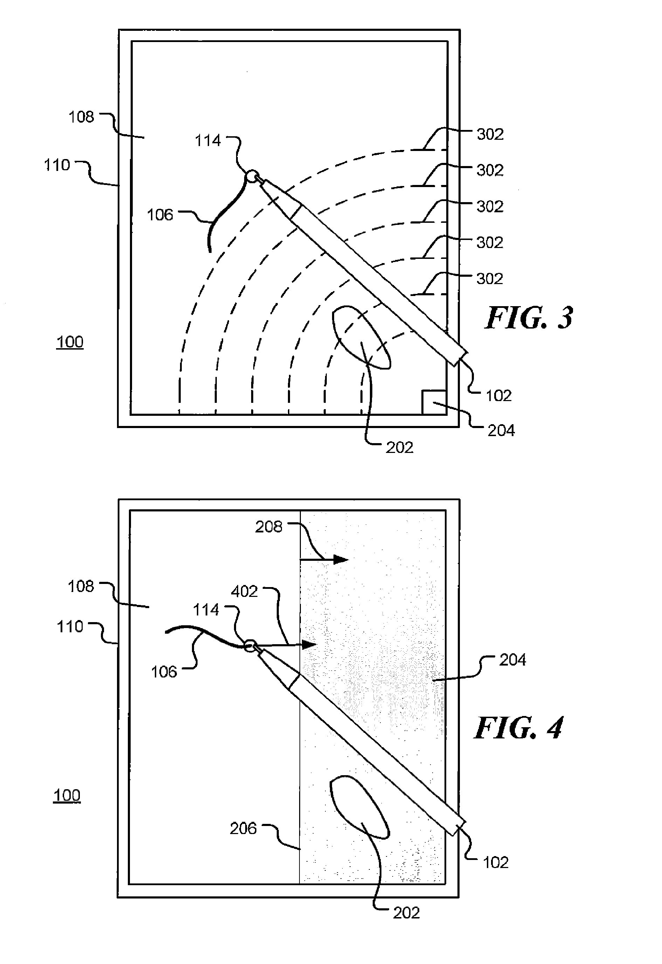

**FIG. 3** is a still further diagram of an illustrative drawing system 100, in accordance with some embodiments of the disclosure. **FIG. 3** shows a first touch position or region 114, corresponding to touch by a pointing device 102, and a second touch region or position 202, corresponding to touch by the palm of a user. In this example, the electronic device 110 is configured for a right-handed user and the selected rejection region 204 of the touch screen comprises the lower right corner of the touch screen 108. If the electronic device were configured for a left handed user, the rejection region could be selected as the lower left corner of the touch screen 108.

The electronic device 110 may be a hand held device or may be used on an angled surface. In these applications, a tilt sensor in the electronic device may be used to detect the orientation of the touch screen. The selected rejection region may then be determined dependent, at least in part, upon the orientation of the touch screen. For example, if the touch screen is rotated to facilitate drawing, the selected rejection region may be rotated by a corresponding amount.

In **FIG. 3**, there are two touch regions: region 114 from the pointing device and region 102 from the user's palm. In one embodiment, the region farthest from the selected rejection region 204 is indentified as the desired position input and is provided to the electronic device. The broken lines 302 indicate contours of points equidistant from the selected rejection region 204. Thus, region 114 is farther than palm region 202 from the selected rejection region 204 and is accepted as the desired input. Equivalently, the region closest the selected rejection region may be ignored or rejected.

**FIG. 4** shows a further example of a computer drawing system. In this example, the selected rejection region 204 of the touch screen 108 comprises the right hand side of the touch screen for a right handed user. The boundary 206 is vertical in this example and may be adjusted as indicated by arrow 208. Similarly, the touch position 114 farthest from the right hand side of the touch screen 108 may be accepted as the desired touch position input. The configuration is reversed for a left-handed user. In either case, the palm touch region 202 is rejected. The rejection region 204 may be indicated on the touch screen 108 by a semi-transparent overlay, by shading, or by other means, and may be variable by user interaction with the touch screen. For example, the boundary 206 may be dragged to a new position.

In one embodiment, the trajectory of the stylus 102 or other pointing device is monitored. If the direction 402 of the trajectory indicates that the pointing device will enter the rejection region 204, the boundary 206 may be moved as indicated by the arrow 208. In this way, the extent of the rejection region 204 is automatically and dynamically adjusted by moving the pointing device towards the boundary. The pointing device 102 may be moved in contact with the surface 108 or it may be moved in a trajectory just above the surface 108. This provides a convenient way for a user to adjust the rejection region. Similarly, the rejection region may be expanded as the pointing devices moves away from the boundary 206.

In the illustrative embodiments described above, the selected rejection region is dependent upon the orientation of the pointing device, either through the handedness of the user, or through sensing of the orientation of a stylus pointing device. Some embodiments of the computer drawing system 100 include a handedness selector, which is used to indicate the handedness of the user to the electronic device. In one embodiment, the handedness selector comprises a graphical user interface rendered on the touch screen. In a further embodiment, the handedness selector comprises an input operable to receive a stylus orientation signal. In a still further embodiment, the handedness selector comprises a switch on the electronic device.

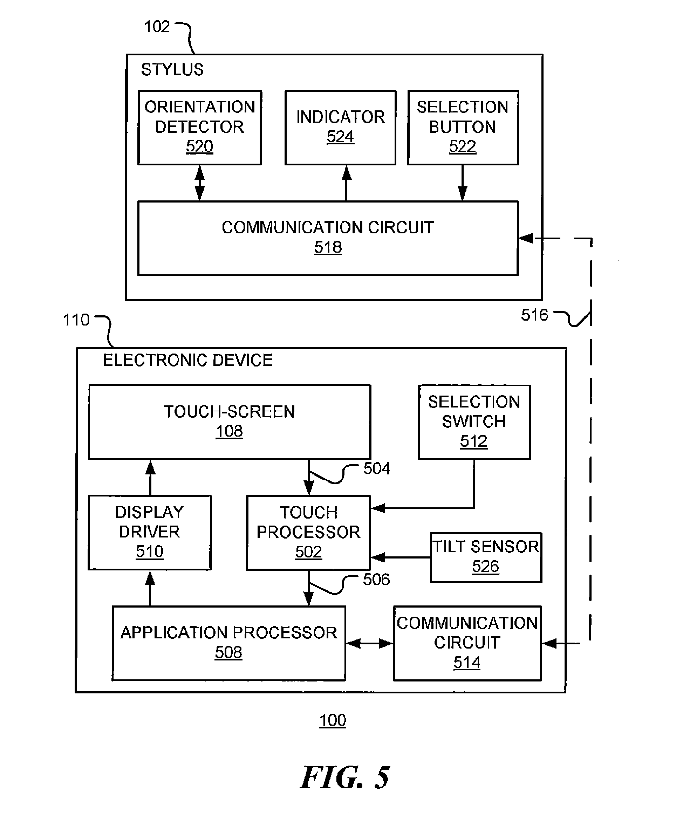

**FIG. 5** is a block diagram of an illustrative computer drawing system 100, in accordance with various embodiments of the present disclosure. In this example, the computer drawing system 100 comprises an electronic device 110 and a stylus 102. The electronic device 110 includes a touch processor 502 that receives touch position inputs 504 from a touch screen 108. The touch processor 502 identifies a desired touch position 506 that is provided as an input to an application processor 508. The touch processor 502 rejects other touch position inputs dependent upon a selected rejection region of the screen. The selected rejection region is determined dependent upon an expected palm position. The electronic device 110 may include an application processor 508 that is responsive to the desired touch signal 506 and is operable to control a computer application dependent upon the desired touch position 506. For example, the application processor 508 may produce images in response to the desired touch position 506. These images are supplied to a display driver 510 and then rendered on the touch screen 108. The electronic device 110 may also include a selection switch 512 that may be set depending on whether the user is right handed or left handed. The selected handedness may be used to predict the orientation of the pointing device and determine, at least in part, the selected rejection region of the touch screen 108.

A communication circuit 514 of the electronic device 110 may be utilized to communicate with the stylus 102 using a communication signal 516. The communication signal 516, which may be transmitted over a wired or wireless connection, is received and/or transmitted by a compatible communication circuit 518 of the stylus 102 to form a communication link. The communication link may be used to transmit orientation data from an orientation detector 520 of the stylus to the electronic device 110. The link may also be used to transmit operation of a selection switch 522 on the stylus to the electronic device 110, or to receive information from the electronic device 110. In one embodiment, the selection switch 522 is used to select between: right-handed palm rejection, left-handed palm rejection and no palm rejection. The palm rejection status may be displayed on an indicator 524, such as a light emitting diode, of the stylus 102. The status may be received from the electronic device 110 via the communication link. The palm rejection status (e.g. 'left', 'right' or 'off') may also be displayed on the touch screen 108 of the electronic device 110.

A tilt sensor 526 of the electronic device 110 may be used to determine the orientation of the touch screen 108. For example, the touch screen 108 may be rotated or inverted to facilitate drawing. When the touch screen is inverted, for example, the rejection region may be moved to the opposite of the touch screen. Thus, the output from the tilt sensor 526 may be used to facilitate dynamic selection of the rejection region on the touch screen.

In the illustrative embodiment shown in **FIG. 5**, the computer drawing system 100 includes a stylus 102 that may be operable to communicate with the electronic device. This communication enables, for example, orientation signals to be exchanged.

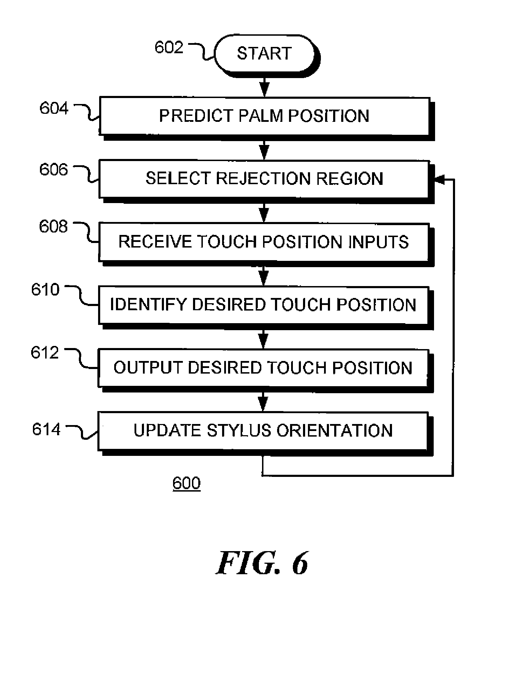

**FIG. 6** is a flow chart of a method 600 for rejecting palm touch input on a touch screen of an electronic device. Following start block 602, the position of the palm, with respect to the touch screen, is determined is predicted at block 604. In one embodiment, the orientation is determined dependent upon the handedness of the user and/or the orientation of a stylus. The handedness, in turn, may be determined by a variety of techniques. In one embodiment, the electronic device is provided with a handedness selection switch. In a further embodiment, handedness is selected via user interaction with a graphical user interface rendered on the touch screen. In a still further embodiment, the orientation of a stylus is determined by an orientation detector on the stylus and communicated with the electronic device. In a still further embodiment, the pointing device comprises a stylus having a handedness selection switch and operable to communicate with the electronic device. Other methods for determining stylus orientation may be used without departing from the present disclosure. At block 606, a rejection region of the touch screen is selected dependent upon the orientation. At block 608, a plurality of touch positions on the touch screen are received. From the plurality of touch positions, a desired touch position is identified at block 610, dependent upon the location of the touch position with respect to the rejection region of the touch screen. In particular, the desired touch position may be displaced from the selected rejection region of the touch screen. The desired touch position may be identified as the touch position most distant from the selected rejection region, for example. At block 612, the desired touch position is output for use in controlling a computer drawing application or the like. At block 614, the stylus orientation is updated. In one embodiment, the orientation is updated through operation of a handedness switch on the electronic device. In a further embodiment, the orientation is updated through operation of a handedness switch on the stylus, the operation being communicated to the electronic device via a wired or wireless communication link. In a still further embodiment the orientation is updated using an orientation detector of the stylus. Flow than returns to block 606 and the method repeats.

Selection of the rejection region of the touch screen dependent upon the stylus orientation may comprise selecting the lower left corner of the touch screen if the electronic device is configured for a left-handed user, and selecting the lower right corner of the touch screen if the electronic device is configured for a right-handed user. In a further embodiment, selection comprises selecting the left side of the touch screen if the electronic device is configured for a left-handed user, and selecting the right side of the touch screen if the electronic device is configured for a right-handed user.

An indicator on the stylus and/or the touch screen may be activated when palm input is being rejected.

The implementations of the present disclosure described above are intended to be illustrative only. Those of skill in the art can effect alterations, modifications and variations to the particular illustrative embodiments herein without departing from the intended scope of the present disclosure. Moreover, selected features from one or more of the above-described illustrative embodiments can be combined to create alternative illustrative embodiments not explicitly described herein.

The various elements of the electronic device and the stylus disclosed herein may be implemented on a programmed processor, on an application specific integrated circuit, on a field programmable gate array or a custom logic circuit. It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. For example, any or all of the position processor, orientation processor and application processor of the host electronic device may be implemented on a programmed processor. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The implementations of the present disclosure described above are intended to be merely exemplary. It will be appreciated by those of skill in the art that alterations, modifications and variations to the illustrative embodiments disclosed herein may be made without departing from the scope of the present disclosure. Moreover, selected features from one or more of the above-described embodiments may be combined to create alternative embodiments not explicitly shown and described herein.

The present disclosure may be embodied in other specific forms without departing from its spirit or essential characteristics. The described illustrative embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An electronic device 110 comprising:
a touch screen 108 configured to generate signals responsive to touch input; and
one or more processors 502 in communication with the touch screen 108 and configured to predict a palm position 202 relative to the touch screen 108 and to disable touch-input functionality of a rejection region 204 of the touch screen 108, the predicted palm position 202 dependent on an orientation of a pointing device 102.

2. An electronic device in 110 accordance with claim 1, wherein the orientation of the pointing device 102 is determined from the handedness of a user.

3. The electronic device 110 of claim 2, further comprising a handedness selector 512.

4. The electronic device of claim 1, wherein the pointing device 102 comprises a stylus and wherein the electronic device 110 further comprises a communication circuit 514 operable to receive a stylus orientation signal 516.

5. An electronic device 110 in accordance with claim 1, further comprising:
a tilt sensor 525 operable to determine an orientation of the touch screen 108,
where the rejection region 204 is determined dependent upon the orientation of the touch screen 108.

6. The electronic device 110 of claim 1, further comprising:
a stylus 102 comprising an indicator 524 and a communication circuit 518 operable to communicate with the electronic device 110;
where the indicator 524 of the stylus 102 is operable to indicate if the rejection region 204 of the touch screen is enabled.

7. The electronic device of claim 1, further comprising:
an application processor 508, responsive to touch input and operable to control a computer application dependent upon the touch input.

8. An electronic device 110 in accordance with claim 1, wherein the rejection region 204 of the touch screen 108 comprises at least part of the lower left corner of the touch screen 108 if the electronic device 110 is configured for a left-handed user and wherein the selected rejection region 108 comprises at least part of the lower right corner of the touch screen if the electronic device 110 is configured for a right-handed user.

9. A method for rejecting palm input on a touch screen 108 of an electronic device 110, the method comprising:
predicting a palm position 202 relative to the touch screen 108, the predicted palm position 202 dependent on an orientation of a pointing device 102; and
disabling touch-input functionality of a rejection region 204 of the touch screen 108, the rejection region 204 dependent upon the predicted palm position 202.

10. The method of claim 9, wherein selecting the rejection region 204 of the touch screen 108 dependent upon the predicted palm position 202 comprises predicting the palm position 202 dependent upon the handedness of a user of the pointing device 102.

11. The method of claim 9, further comprising:
determining the handedness of a user dependent upon user interaction with an interface 512 of the electronic device 110.

12. The method of claim 9, wherein selecting the rejection region of the touch screen 108 dependent upon the predicted palm position 202 comprises:
selecting at least part of the left side of the touch screen 108 as the rejection region 204 if the electronic device 110 is configured for a left-handed user; and
selecting at least part of the right side of the touch screen 108 as the rejection region 204 if the electronic device 110 is configured for a right-handed user.

13. The method of claim 9, wherein the pointing device 102 comprises a stylus and wherein selecting a rejection region 204 of the touch screen 108 dependent upon a predicted palm position 202 comprises predicting the palm position 202 dependent upon an orientation of a stylus 102 with respect to the touch screen 108.

14. The method of claim 9, wherein the pointing device 102 comprises a stylus, the method further comprising:
activating an indicator 524 on the stylus when palm input 202 is being rejected.

15. The method of claim 9, further comprising:
adjusting the rejection region 204 dependent upon a trajectory 106 of a pointing device 102.
